# EUROPEAN PATENT APPLICATION

(11) **EP 4 663 468 A1**
(43) Date of publication of application: **17.12.2025**
(21) Application number: 23935527.4
(22) Date of filing: 15.12.2023
(51) Int. Cl.: B60L 58/12, B60L 58/16, B60W 60/00, B60W 50/00

(54) **COMPUTING SYSTEM PROVIDING ENERGY MANAGEMENT SERVICE LINKED TO AUTONOMOUS DRIVING, AND VEHICLE**

(30) Priority: 28.04.2023 KR 20230056683; 25.10.2023 KR 20230144210
(71) Applicant: LG Energy Solution, Ltd., Seoul 07335 (KR)
(72) Inventor: KIM, Min Yi, Daejeon 34122 (KR); BANG, Ji Won, Daejeon 34122 (KR); MOON, Chi Ho, Daejeon 34122 (KR)
(74) Representative: Plasseraud IP
(86) International application number: PCT/KR2023/020826
(87) International publication number: WO 2024/225555

(57) **Abstract**

A computing system includes an autonomous driving controller that controls autonomous driving of a vehicle, and an energy management unit that provides a service related to battery management, wherein the autonomous driving controller acquires battery data from a battery management system (BMS) and transmits the acquired battery data to the energy management unit, and the energy management unit generates energy management data based on the transmitted battery data and transmits at least a portion of the generated energy management data to at least one of the autonomous driving controller or the BMS.

## Description

### [TECHNICAL FIELD]

### CROSS-REFERENCE TO RELATED APPLICATION

This application claims priority to and the benefit of Korean Patent Application No. 10-2023-0056683 filed in the Korean Intellectual Property Office on April 28, 2023 and Korean Patent Application No. 10-2023-0144210 filed in the Korean Intellectual Property Office on October 25, 2023, the entire contents of which are incorporated herein by reference.

### TECHNICAL FIELD

The disclosure relates to a computing system and a vehicle providing an energy management service linked to autonomous driving.

### [BACKGROUND ART]

As the demand for eco-friendly vehicles increases, electric vehicles (EVs) having batteries such as lithium-ion secondary batteries as energy sources are rapidly replacing conventional internal combustion engine vehicles. In the meantime, as artificial intelligence technologies and various sensor technologies are advanced, research and development for improving the performance of hardware and software related to a vehicle's autonomous driving system are also being actively conducted. Accordingly, the autonomous driving system for supporting autonomous driving of a vehicle has been recently developed or provided in the form of autonomous driving platforms, including various sensors and control units. Some EV makers are mass-producing or developing autonomous driving EVs based on these autonomous driving platforms.

To advance autonomous driving technologies of EVs to reduce or eliminate the emission of greenhouse gasses and thereby mitigate the effects of climate change, vehicle energy management is very important. In this regard, in a process in which the vehicle performs the autonomous driving, events that determine various behaviors and driving scenarios may occur, and the events are inevitably closely related to energy consumption or energy management. However, a general EV does not have an energy management function or does not consider an energy management aspect, aside from the calculations related to this energy management function that are generally processed by a battery management system (BMS) provided in a battery itself. However, as the diversification of energy management functions increases and this more advanced energy management calculations are required, the processing capacity of the BMS may reach a limit.

### [DISCLOSURE]

### [TECHNICAL PROBLEM]

An aspect of the disclosure is to provide a computing system that may provide an energy management service based on battery data as well as autonomous driving control and a vehicle including the same. The energy management service may facilitate more economical driving by the autonomous driving platform as compared to a conventional autonomous vehicle, which in turn may further improve the overall energy efficiency of the vehicle, thereby leading to reduced energy use. Furthermore, the energy management service can be implemented in the automated vehicle platforms of many types of vehicles, leading to widespread improvements in energy efficiency.

The technical objectives of embodiments of the disclosure are not limited to the aforementioned problems, and any other technical problems not mentioned herein will be clearly understood from the following description by those skilled in the art to which the disclosure pertains.

### [TECHNICAL SOLUTION]

In accordance with an aspect of the disclosure, a computing system includes at least one processor operatively coupled to a battery management system (BMS) for managing a battery of a vehicle, the at least one processor that is configured to execute a first program controlling autonomous driving of the vehicle, execute a second program providing one or more energy management services for the vehicle, acquire battery data from the BMS, generate, according to the second program, energy management data based on the acquired battery data, and one or both of: provide at least a portion of the generated energy management data to the BMS, or execute the first program based on at least a portion of the generated energy management data.

In the computing system according to some embodiments disclosed herein, the energy management data may include at least one of battery state diagnosis data, battery lifetime prediction data, battery operation control data, battery charging/discharging control data, or vehicle control data.

In the computing system according to some embodiments disclosed herein, the one or more energy management services may include at least one of a service for providing a diagnosis result obtained by diagnosing state of the battery of the vehicle, or a service for providing a life analysis result of the battery of the vehicle.

In the computing system according to some embodiments disclosed herein, the at least one processor may be configured to execute the first program to generate first BMS control data for controlling battery data transmission of the BMS based on the acquired battery data and provide the generated first BMS control data to the BMS.

In the computing system according to some embodiments disclosed herein, the autonomous driving controller, the first BMS control data may control a battery data transmission period of the BMS, and the at least one processor may be configured to execute the first program to generate the first BMS control data for controlling the battery data transmission period of the BMS based on a temperature of the battery identified through the acquired battery data.

In the computing system according to some embodiments disclosed herein, the at least one processor may be configured to execute the first program to acquire driving data from at least one component of the vehicle and energy management data may be generated by the second program based on the acquired driving data.

In the computing system according to some embodiments disclosed herein, the at least one component of the vehicle may include a sensor that collects data related to a driving situation of the vehicle or a communication module configured to communicate data between the at least one processor and an electronic device external to the vehicle.

In the computing system according to some embodiments disclosed herein, the at least one processor may be configured to execute the first program to generate component control data for controlling transmission of the driving data from the at least one component of the vehicle based on the acquired battery data and transmit the generated component control data to the at least one component of the vehicle.

In the computing system according to some embodiments disclosed herein, the component control data may control a driving data transmission period of the at least one component of the vehicle and may be based on a temperature of the battery identified through the acquired battery data.

In the computing system according to some embodiments disclosed herein, the at least one processor may be configured to execute the first program to generate second BMS control data for controlling battery data transmission of the BMS based on the acquired driving data and transmit the generated second BMS control data to the BMS.

In the computing system according to some embodiments disclosed herein, the second BMS control data may control at least one of a battery data transmission period of the BMS or a list of one or more types of battery data to be acquired from the BMS by the at least one processor.

In the computing system according to some embodiments disclosed herein, the at least one processor may be configured to execute the second program to transmit the generated energy management data to a data management server, and receive energy management software update from the data management server. The energy management software update may be based on energy management data from computing systems of other autonomous vehicles.

In the computing system according to some embodiments disclosed herein, the BMS may be included in the battery of the vehicle.

In the computing system according to some embodiments disclosed herein, the at least one processor may be included in the vehicle.

In the computing system according to some embodiments disclosed herein, the at least one processor may be included in a system-on-a-chip that is configured to execute both the first and second programs.

In accordance with another aspect of the disclosure, a vehicle includes a battery including a battery management system (BMS), and a computing system as described in any of the embodiments presented herein.

The vehicle may further include a sensor configured to collect data related to a driving situation of the vehicle, wherein the at least one processor may be configured to execute the first program to acquire driving data from the sensor and generate the energy management data further based on the acquired driving data.

In the vehicle according to some embodiments disclosed herein, the at least one processor may be configured to execute the first program to generate sensor control data for controlling transmission of the driving data from the sensor based on the acquired battery data and transmit the generated sensor control data to the sensor.

In the vehicle according to some embodiments disclosed herein, the at least one processor may be configured to execute the first program to generate the sensor control data for controlling a driving data transmission period of the sensor based on a temperature of the battery identified through the acquired battery data.

The vehicle may further include a communication module that communicates with an external electronic device, wherein the at least one processor is configured to execute the second program to transmit the generated energy management data to a data management server using the communication module and receive an energy management software update from the data management server, and the energy management software update is based on energy management data from computing systems of other autonomous vehicle.

### [ADVANTAGEOUS EFFECTS]

According to embodiments disclosed herein, a computing system capable of providing not only autonomous driving control but also an energy management service based on battery data and a vehicle including the same can be provided.

The advantageous effects according to the embodiments disclosed herein are not limited to the effects mentioned above, and other effects not mentioned will be clearly understood by those skilled in the art following the disclosure.

### [BRIEF DESCRIPTION OF DRAWINGS]

FIG. 1 is a block diagram of a vehicle according to some embodiments;
FIG. 2 is a view for describing an operation of components included in a computing system according to some embodiments;
FIG. 3 is a view illustrating a vehicle management system according to some embodiments;
FIG. 4 is a flowchart of operations of a battery management system (BMS), an autonomous driving controller, and an energy management unit according to some embodiments;
FIG. 5 is a flowchart of the operations of the BMS and the autonomous driving controller according to some embodiments;
FIG. 6 is a flowchart of operations of the BMS, a sensor module, the autonomous driving controller, and the energy management unit according to some embodiments;
FIG. 7 is a flowchart of the operations of the BMS, the autonomous driving controller, and the sensor module according to some embodiments;
FIG. 8 is a flowchart of the operations of the BMS, the autonomous driving controller, and the sensor module according to some embodiments; and
FIG. 9 is a flowchart of operations of the energy management unit and a data management server according to some embodiments.

### [MODE FOR INVENTION]

Hereinafter, embodiments of this specification may be described with reference to the accompanying drawings. However, it should be understood that the disclosure of this specification is not intended to limit the specific embodiments, but includes various modifications, equivalents, and/or alternatives of the embodiments described herein.

Embodiments of the disclosure and terms used herein are not intended to limit the technical features described in the disclosure to specific embodiments, and it should be understood that the embodiments and the terms may include modifications, equivalents, or alternatives on the corresponding embodiments described herein. With regard to the descriptions of the drawings, similar or related components may be marked by similar reference marks/numerals. The singular form of the noun corresponding to an item may include one or more of the item, unless interpreted otherwise in context.

In the disclosure, the expressions "A or B", "at least one of A and B", "at least one of A or B", "A, B, or C", "at least one of A, B, and C", and "at least one of A, B, or C" may include any and all combinations of one or more of the associated listed items. The terms, such as "first", "second", "A", "B", "(a)", or "(b)" may be used to simply distinguish the corresponding component from the other component, but do not limit the corresponding components in other aspects (e.g., importance or order) unless specifically stated to the contrary.

In this specification, when a component (e.g., a first component) is referred to as being "coupled with/to" or "connected with/to" another component (e.g., a second component) with or without the term of "operatively" or "communicatively", it may mean that a component is connectable to the other component, directly (e.g., by wire or wirelessly), or indirectly (e.g., through the third component).

A method according to various embodiments disclosed herein may be provided to be included in a computer program product. The computer program product may be traded between a seller and a buyer as a product. The computer program product may be distributed in the form of a machine-readable storage medium (e.g., compact disc read only memory (CD-ROM)) or may be distributed (e.g., downloaded or uploaded), through an application store, directly between two user devices, or online. In the case of on-line distribution, at least part of the computer program product may be at least temporarily stored in the machine-readable storage medium such as the memory of a manufacturer's server, an application store's server, or a relay server or may be generated temporarily.

According to embodiments disclosed herein, each component (e.g., a module or a program) of the components described herein may include a single entity or a plurality of entities, and some of the plurality of objects may be separately arranged on other components. According to embodiments disclosed herein, one or more of the components or operations described herein may be omitted, or one or more other components or operations may be added. Alternatively or additionally, a plurality of components (e.g., a module or a program) may be integrated into one component. In this case, the integrated component may perform one or more functions of each component of the plurality of components in the manner same as or similar to being performed by the corresponding component of the plurality of components prior to the integration. According to embodiments disclosed herein, operations executed by modules, programs, or other components may be executed by a successive method, a parallel method, a repeated method, or a heuristic method. Alternatively, at least one or more of the operations may be executed in another order or may be omitted, or one or more operations may be added.

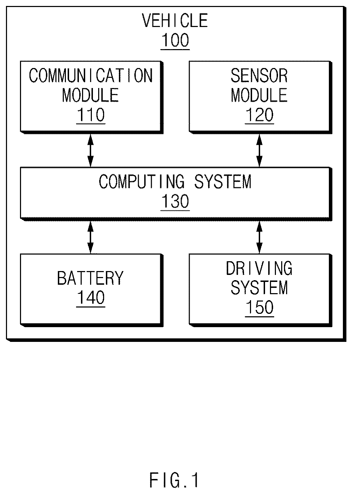

FIG. 1 is a block diagram of a vehicle according to some embodiments.

Referring to FIG. 1, a vehicle 100 may include a communication module 110, a sensor module 120, a computing system 130, a battery 140, and a driving system 150. For example, the vehicle 100 may be an electric vehicle (EV) or a hybrid electric vehicle (HEV) that generates a driving force using electrical energy. Further, according to various embodiments, the vehicle 100 may include a vehicle having an autonomous driving function, and the communication module 110, the sensor module 120, and the computing system 130 may be implemented in the form of an autonomous driving platform, but the disclosure is not limited thereto.

The communication module 130 may communicate with the external electronic device. For example, the communication module 100 may establish a wired and/or wireless communication channel and exchange various pieces of data with an external electronic device that is external to the vehicle through one or more established communication channels. For example, the communication module 100 may include a wireless transmitter and/or receiver configured to support communication over any one or combination of wireless protocols, including but not limited to cellular network connections, LTE, 4G, WiFi, GPS, Bluetooth^{®}, Bluetooth LE, or near-field communications.

In some embodiments, the external electronic device may include one or a combination of processing and data storage devices. The processing and data storage devices may include one or more servers, such as a server in communication with the autonomous vehicle platform, a server in communication with the battery of the vehicle, as well as other servers or any combination thereof.

The sensor module 120 may detect objects positioned around the vehicle 100. For example, the sensor module 120 may include a camera sensor for detecting surrounding objects, a global navigation satellite system (GNSS) sensor for assisting with a mapping function, a perception function, an occupancy grid creation function and/or a route planning function, a radio detection and ranging (RADAR) sensor for detecting surrounding vehicles, an ultrasonic sensor for parking assistance and/or occupancy grid creation, a light detection and ranging (LIDAR) sensor for detection of an object and a pedestrian, emergency breaking, collision avoidance and/or other functions, an inertial measurement unit (IMU) sensor including an accelerometer, a magnetometer, a gyroscope and/or a magnetic compasses, a vibration sensor, a temperature sensor and/or a speed sensor.

The computing system 130 may manage the overall operations of the vehicle 100, and functions provided by the vehicle 100, and the like, including but not limited to autonomous driving functions and energy management functions. To this end, the computing system 130 may control and/or manage operations of the communication module 110, the sensor module 120, the battery 140 and/or the driving system 150.

The computing system 130 may process various calculations related to the vehicle 100 and may execute programs, software, or instructions. According to some embodiments, the computing system 130 may process calculations related to driving control of the vehicle 100 and/or calculations related to an energy management function. For example, the calculations related to the driving control of the vehicle 100 may include calculations for determining a driving strategy, a driving route, a behavior, or the like of the vehicle 100.

The computing system 130 may process the calculations related to the driving control of the vehicle 100 and/or the calculations related to the energy management function based on driving data of the vehicle 100 and/or battery data (e.g., voltage data, current data, temperature data and/or charging state data, a state of charge (SOC), a state of health (SOH), an accumulated charging current amount, an accumulated discharging current amount, an accumulated charging power amount, an accumulated discharging power amount, an insulation resistance, relay state data, or the like) indicating a state of the battery 140.

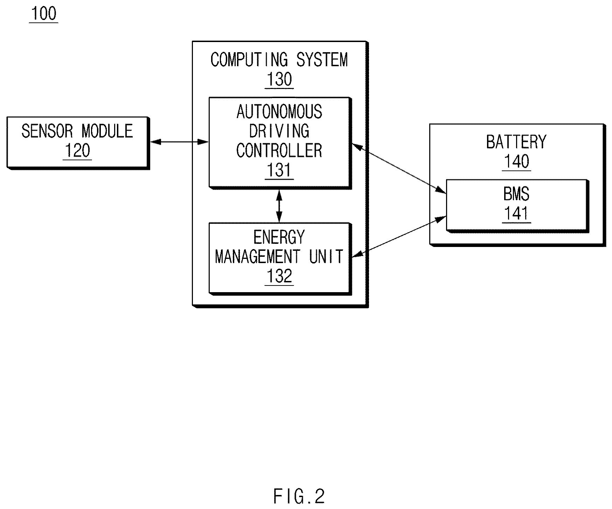

In the case of a general electric vehicle, a controller of the vehicle processes only the calculations related to the driving control, and a battery management module processes the calculations related to the energy management function. However, the computing system 130 may process all the calculations related to the driving control and the calculations related to the energy management function. According to this method, because the computing system 130 having a relatively high computational processing capability compared to a management module (e.g., a BMS 141 in FIG. 2) of the battery 140 may perform the energy management function, energy management of the vehicle 100 may be performed more stably and smoothly.

Further, some of the calculations related to the energy management function of the vehicle 100 may be processed by the computing system 130, and the other calculations may be processed by the management module of the battery 140. In this way, because the calculations related to the energy management function are distributed to the computing system 130 and the battery 140, the energy management of the vehicle 100 may be performed more stably and smoothly, and the management module provided in the battery 140 may be downgraded.

The computing system 130 may include at least one processor for processing calculations and executing the instructions and an interface circuit for interacting with other elements of the vehicle 100. According to some embodiments, a communication method for the interface circuit may be a device-to-device communication method such as a bus, general purpose input and output (GPIO), a serial peripheral interface (SPI), and a mobile industry processor interface (MIPI).

At least one processor of the computing system 130 may have a structure for executing instructions for implementing processes processed inside the vehicle 100. The at least one processor may be implemented as an array of a plurality of logic gates for processing various calculations or a general-purpose microprocessor, and may be composed of a single processor or a plurality of processors. For example, the at least one processor may be implemented in the form of a microprocessor, a central processing unit (CPU), a graphic processor unit (GPU), an application processor (AP), or combinations thereof.

The at least one processor of the computing system 130 may be formed/implemented separately from or integrally with a memory (not illustrated) that stores instructions and may process various calculations by executing the instructions stored in the memory. The memory may store various pieces of data, instructions, mobile applications, computer programs, or the like. For example, the memory may be implemented as a non-volatile memory such as a read-only memory (ROM), a programmable read-only memory (PROM), an erasable programming read-only memory (EPROM), an electrically erasable and programmable read only memory (EEPROM), a flash memory, a phase-change random access memory (PRAM), a magnetic random access memory (MRAM), a resistance random access memory (RRAM), and a ferroelectric random access memory (FRAM) or a volatile memory such as a dynamic random access memory (DRAM), a static random access memory (SRAM), a synchronous dynamic random access memory (SDRAM), the phase-change random access memory (PRAM), the resistance random access memory (RRAM), and a ferroelectric random access memory (FeRAM) and may be implemented in the form of a hard disk drive (HDD), a solid state drive (SSD), a secure digital (SD) card, a micro-SD card or combinations thereof.

The battery 140 may supply power and/or electrical energy to the vehicle 100. For example, the battery 140 may be a rechargeable secondary battery that is discharged while supplying power to the vehicle 100 and is charged by a battery charging device or may be, for example, a lithium ion battery, but the disclosure is not limited thereto. According to some embodiments, the battery 140 may include a battery cell, a battery module, a battery pack, and/or a battery rack.

The driving system 150 may control driving and/or behavior of the vehicle 100. For example, the driving system 150 may control an operation of an actuator related to braking, driving, and a posture of the vehicle 100. According to some embodiments, the driving system 150 may include a braking system that controls an operation of a braking-related actuator, a posture control system that controls the operation of the actuator for maintaining stability of the vehicle body, a steering system that controls the operation of the actuator for controlling a transverse behavior of the vehicle, a gear shift system that controls the operation of the actuator for automatic gear shift and/or an engine management system that controls the operation of the actuator for controlling a driving speed of the vehicle. However, the disclosure is not limited thereto.

According to some embodiments, the driving system 150 may control the driving and/or the behavior of the vehicle 100 in response to a control instruction of the computing system 130. For example, the driving system 150 may control the driving and/or the behavior of the vehicle 100 in response to the control instruction based on a calculation result (e.g., result of a calculation/execution of program) of the computing system 130.

FIG. 2 is a view for describing an operation of components included in a computing system according to some embodiments.

Referring to FIG. 2, the computing system 130 may include an autonomous driving controller 131 and an energy management unit 132.

According to some embodiments, the autonomous driving controller 131 may execute a first program that controls autonomous driving of the vehicle 100. The first program may be autonomous driving software stored in the memory (not illustrated) included in the computing system 130. Operations of the autonomous driving controller 131, which are described herein, may be operations performed by executing the first program by the autonomous driving controller 131.

According to some embodiments, the autonomous driving controller 131 may acquire the driving data of the vehicle 100 from at least one vehicle module (e.g., the communication module 110 and/or the sensor module 120). The driving data may include various pieces of data related to the driving of the vehicle 100, which are acquired by the communication module 110 and/or the sensor module 120. For example, the driving data may include object data and behavior data, the object data may include the type and number of surrounding objects, a distance between the object and the vehicle 100, a position of the object with respect to the vehicle 100, a ground position, a relative speed, a ground speed, relative acceleration, ground acceleration, and the like, and the behavior data may include a position, a moving path, a travel distance, a speed, acceleration, a steering angle, a yaw, a pitch, a roll, and the like of the vehicle 100.

According to some embodiments, the autonomous driving controller 131 may control the driving system 150 based on the driving data to control driving including the acceleration, deceleration, steering, and combinations thereof for the autonomous driving of the vehicle 100.

According to some embodiments, the autonomous driving controller 131 may transmit the driving data to the energy management unit 132.

According to some embodiments, the autonomous driving controller 131 may acquire, from the BMS 141, the battery data (e.g., the voltage data, the current data, the temperature data, the SOC, the SOH, the accumulated charging current amount, the accumulated discharging current amount, the accumulated charging power amount, the accumulated discharging power amount, the insulation resistance, the relay state data, or the like) related to the state of the battery. The battery 140 may include the battery cell, the battery module, the battery pack, and/or the battery rack. Additionally, in some embodiments, the battery 140 may include the BMS 141 for managing the battery cell, the battery module, the battery pack or the like.

Stated another way, the BMS 141 may be a part of the vehicle 100. In other embodiments, the BMS 141 may be fully or partially remote from the vehicle 100. For instance, the battery management functions of the BMS 141 may be handled by processing and data storage components of an external device, such as one or more servers, or a distributed computing network or cloud network.

According to some embodiments, the BMS 141 may overall manage an operation/function of the battery 140. According to some embodiments, the BMS 141 may process the calculations related to the energy management function, and in some cases, the BMS 141 may provide processing results of the calculations to the computing system 130. For example, the BMS 141 may measure a voltage, a current, a temperature, and the like of the battery 140 and generate the battery data by estimating the SOC, the SOH, and the like. According to some embodiments, the SOC or the SOH may be estimated not by the BMS 141 but by the energy management unit 132.

According to some embodiments, the autonomous driving controller 131 may control the driving system 150 further in consideration of the battery data to control the driving including the acceleration, the deceleration, the steering, and combinations thereof for the autonomous driving of the vehicle 100.

According to some embodiments, the autonomous driving controller 131 may transmit the battery data to the energy management unit 132.

According to some embodiments, the energy management unit 132 may execute a second program to provide various energy management services (e.g., battery condition diagnosis, battery lifetime prediction, battery operation control, battery charging/discharging control, and the like) related to the energy management of the vehicle 100. For example, the energy management unit 132 may transmit energy management data generated by executing the second program to the autonomous driving controller 131 and/or the BMS 141. The second program may be energy management software stored in the memory (not illustrated) included in the computing system 130. Operations of the energy management unit 132, which are described herein, may be operations performed by executing the second program by the energy management unit 132.

According to some embodiments, the energy management unit 132 may acquire the driving data and/or the battery data from the autonomous driving controller 131. According to some embodiments, the energy management unit 132 may directly acquire the battery data from the BMS 141.

According to some embodiments, the energy management unit 132 may generate the energy management data based on the driving data and/or the battery data. The energy management data may include data for providing various energy management services related to the battery 140. For example, the energy management data may include battery state diagnosis data, battery lifetime prediction data, battery operation control data, battery charging/discharging control data and/or vehicle module control data.

According to some embodiments, the energy management unit 132 may diagnose whether the battery 140 is abnormal, broken, or defective based on the driving data and/or the battery data and may generate the battery state diagnosis data as a result of the diagnosis.

According to some embodiments, the energy management unit 132 may predict a lifetime of the battery in consideration of a voltage, a current, a temperature and/or a charging state of the battery 140, which are included in the battery data. As another example, the energy management unit 132 may also predict the lifetime of the battery 140 further in consideration of the driving data (e.g., whether the autonomous driving is performed, a speed, acceleration, braking, and driving) of the vehicle 100 as well as the battery data. The energy management unit 132 may generate the battery lifetime prediction data as a result of the lifetime prediction.

According to some embodiments, the energy management unit 132 may provide an operation control service of the battery 140 based on the driving data and/or the battery data. According to some embodiments, the energy management unit 132 may determine a driving situation of the vehicle 100 based on the driving data (e.g., speed data, acceleration data, lateral acceleration data, a wheel speed, distances from front and rear vehicles, and a time to collision (TTC)) of the vehicle 100. The energy management unit 132 may generate the battery operation control data for allowing the battery 140 to perform an operation corresponding to the driving situation. According to some embodiments, the energy management unit 132 may generate the battery operation control data for performing an operation (e.g., battery balancing, relay on/off control, and the like) corresponding to the state of the battery 140 based on the battery data, the battery state diagnosis data, and/or the battery lifetime prediction data.

According to some embodiments, the energy management unit 132 may provide a charging/discharging control service of the battery 140 based on the driving data and/or the battery data. According to some embodiments, the energy management unit 132 may generate charging control data for controlling power supplied to the battery 140 during charging based on the driving situation of the vehicle 100 and/or the state of the battery 140. According to some embodiments, the energy management unit 132 may generate discharging control data for controlling power output from the battery 140 when the battery 140 is used, based on the driving situation of the vehicle 100 and/or the state of the battery 140.

According to some embodiments, the energy management unit 140 may provide a service for controlling an operation of at least one module (e.g., the communication module 110, the sensor module 120, and the driving system 140) included in the vehicle 110, based on the driving data and/or the battery data. According to some embodiments, the energy management unit 140 may generate control data for controlling whether at least one sensor (e.g., a global navigation satellite system (GNSS) sensor, a radio detection and ranging (RADAR) sensor, an ultrasonic sensor and/or a light detection and ranging (LIDAR) sensor) included in the sensor module 120 is used, an operation priority and/or an operation period, based on the driving situation of the vehicle 100 and/or the state of the battery 140.

According to some embodiments, the energy management unit 140 may transmit the generated energy management data to the autonomous driving controller 131. The autonomous driving controller 131 may transmit the transmitted energy management data to the BMS 141. According to some embodiments, the energy management unit 140 may directly transmit the generated energy management data to the BMS 141.

According to some embodiments, the autonomous driving controller 131 may control battery data transmission of the BMS 141 based on the battery data acquired from the BMS 141 and/or the driving data acquired from at least one vehicle module (e.g., the communication module 110 and/or the sensor module 120). In detail, the autonomous driving controller 131 may generate BMS control data for controlling battery data transmission of the BMS 141 based on the battery data acquired from the BMS 141 and/or the driving data acquired from the sensor module 120 and may control the battery data transmission of the BMS 141 by transmitting the generated BMS control data to the BMS 141. The BMS control data may include an instruction for controlling the battery data transmission of the BMS 141. The BMS 141 may control the battery data transmission to the autonomous driving controller 131 based on the transmitted BMS control data.

According to some embodiments, the BMS control data may include an instruction for setting a period during which the BMS 141 transmits the battery data to the autonomous driving controller 131. In this case, the BMS 141 may set a period during which the battery data is transmitted to the autonomous driving controller 131 as a period included in first BMS control data.

According to some embodiments, the BMS control data may include an instruction for setting a battery data list to be transmitted from the BMS 141 to the autonomous driving controller 131. In this case, the BMS 141 may transmit data included in the battery data list to the autonomous driving controller 131. For example, when only voltage data and current data are included in the battery data list, the BMS 141 may transmit only the voltage data and the current data of the battery 140 to the autonomous driving controller 131.

According to some embodiments, the autonomous driving controller 131 may identify the temperature of the battery 140 through the battery data acquired from the BMS 141. According to some embodiments, the autonomous driving controller 131 may control a battery data transmission period of the BMS 141 based on the identified temperature. In detail, the autonomous driving controller 131 may generate the first BMS control data for controlling the battery data transmission period of the BMS 141 based on the identified temperature and transmit the generated first BMS control data to the BMS 141. For example, the autonomous driving controller 131 may allow the battery data transmission period of the BMS 141 to increase as the identified temperature increases. As another example, the autonomous driving controller 131 may allow the battery data transmission of the BMS 141 to be stopped for a specified period of time when the identified temperature is greater than or equal to a specified threshold value. Therefore, the autonomous driving controller 131 may maintain the temperature of the battery 140 at a predetermined level by minimizing a data transmission operation of the battery 140 of which the temperature increases.

According to some embodiments, the autonomous driving controller 131 may identify a size of the driving data acquired from at least one vehicle module (e.g., the communication module 110 and/or the sensor module 120). According to some embodiments, the autonomous driving controller 131 may control the battery data transmission period of the BMS 141 and/or set the battery data list to be transmitted from the BMS 141 to the autonomous driving controller 131, based on the identified size of the driving data. In detail, the autonomous driving controller 131 may control the battery data transmission period of the BMS 141 and/or generate second BMS control data for setting the battery data list to be transmitted from the BMS 141 to the autonomous driving controller 131 based on the identified size of the driving data. Further, the autonomous driving controller 131 may transmit the generated second BMS control data to the BMS 141.

According to some embodiments, the autonomous driving controller 131 may identify a driving environment and/or a driving mode of the vehicle 100 based on the acquired driving data. According to some embodiments, the autonomous driving controller 131 may control the battery data transmission period of the BMS 141 and/or set the battery data list to be transmitted from the BMS 141 to the autonomous driving controller 131, based on the identified driving environment and/or the identified driving mode of the vehicle 100. In detail, the autonomous driving controller 131 may control the battery data transmission period of the BMS 141 and/or generate the second BMS control data for setting the battery data list to be transmitted from the BMS 141 to the autonomous driving controller 131 based on the identified driving environment and/or the identified driving mode of the vehicle 100. Further, the autonomous driving controller 131 may transmit the generated second BMS control data to the BMS 141. For example, the autonomous driving controller 131 may control the battery data transmission period of the BMS 141 to be longer than a specified length of time when the vehicle 100 enters a highway. As another example, the autonomous driving controller 131 may control the battery data transmission period of the BMS 141 to decrease as an autonomous driving level (e.g., level 1, level 2, or level 3) of the vehicle 100 increases.

According to some embodiments, the autonomous driving controller 131 may control driving data transmission of at least one vehicle module (e.g., the communication module 110 and/or the sensor module 120) based on the battery data acquired from the BMS 141. In detail, the autonomous driving controller 131 may control the driving data transmission of the at least one vehicle module (e.g., the communication module 110 and/or the sensor module 120) by generating module control data for controlling the driving data transmission of the at least one vehicle module based on the battery data acquired from the BMS 141 and the generated module control data to the at least one vehicle module. The module control data may include an instruction for controlling the driving data transmission of the at least one vehicle module. The at least one vehicle module may control the driving data transmission to the autonomous driving controller 131 based on the transmitted module control data.

According to some embodiments, the module control data may include an instruction for setting a period during which the at least one vehicle module transmits the driving data to the autonomous driving controller 131. In this case, the at least one vehicle module may set a period during which the driving data is transmitted to the autonomous driving controller 131 as a period included in the received module control data.

According to some embodiments, the module control data may include an instruction for setting a driving data list which the at least one vehicle module transmits to the autonomous driving controller 131. In this case, the at least one vehicle module may transmit data included in the driving data list to the autonomous driving controller 131. For example, when only object data is included in the driving data list, the at least one vehicle module may transmit only the object data of the vehicle 100 to the autonomous driving controller 131.

According to some embodiments, the autonomous driving controller 131 may identify the temperature of the battery 140 through the battery data acquired from the BMS 141. According to some embodiments, the autonomous driving controller 131 may control a driving data transmission period of the at least one vehicle based on the identified temperature. In detail, the autonomous driving controller 131 may generate module control data for controlling the driving data transmission period of the at least one vehicle module based on the identified temperature and transmit the generated module control data to the at least one vehicle module. For example, the autonomous driving controller 131 may allow the driving data transmission period of the at least one vehicle module to decrease as the identified temperature increases.

According to some embodiments, a warning about thermal runaway of the battery 140 may be performed in stages based on the temperature of the battery 140. According to some embodiments, the autonomous driving controller 131 may control the driving data transmission period of the at least one vehicle according to a thermal runaway warning level of the battery 140. For example, the autonomous driving controller 131 may allow the driving data transmission period of the at least one vehicle module to decrease as the thermal runaway warning level increases.

Therefore, the autonomous driving controller 131 may allow the driving data transmission period to decrease as the temperature of the battery 140 increases and thus may prepare for emergency situations (e.g., limitation of a driving assistance function, limitation of a vehicle speed, limitation of an air conditioner, limitation of a display, limitation of a sports driving mode, and the like) that may occur as the temperature of the battery 140 increases.

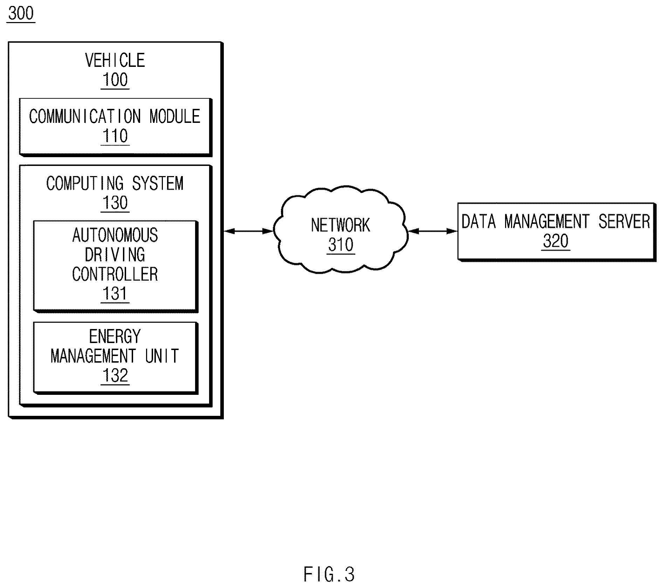

FIG. 3 is a view illustrating a vehicle management system according to some embodiments.

Referring to FIG. 3, a vehicle management system 300 may include the vehicle 100, a network 310, and a data management server 320. For example, the vehicle management system 300 may refer to a system that manages the vehicle 100 by allowing the data management server 320 to analyze and/or manage data related to the vehicle 100, which is collected through the network 310.

According to some embodiments, the communication module 110 may communicate with an external electronic device (e.g., the data management server 320). For example, the communication module 110 may establish a wired and/or wireless communication channel and exchange various pieces of data with the external electronic device through one or more established communication channels. According to some embodiments, the communication module 110 may access the data management server 320 through the network 310. According to some embodiments, the communication module 110 may transmit vehicle data related to the vehicle 100 to the data management server 320. For example, the energy management unit 132 may transmit the pre-generated energy management data to the data management server 320 using the communication module 110. According to some embodiments, the communication module 110 may receive the second program from the data management server 320. For example, the energy management unit 132 may receive the second program from the data management server 320 using the communication module 110.

According to some embodiments, the network 310 may refer to a data communication network for supporting communication between the vehicle 100 and the data management server 320. For example, the network 310 may include a wired network, a wireless network, and a combination thereof, but the disclosure is not limited thereto, and the network 310 may be another type of network as long as the network supports data exchange. According to some embodiments, the wired network may include a local or wide area Internet that supports a transmission control protocol/Internet protocol (TCP/IP), and the wireless network may include a base station-based wireless communication network, a satellite communication network, a short-range wireless communication network such as Wi-Fi, or a combination thereof.

According to some embodiments, the network 310 may include a second generation (2G) network to a fifth generation (5G) network as well as future network generations, long term evolution (LTE) networks, global system for mobile communication (GSM) networks, code division multiple accesses (CDMA) networks, evolution-data optimization (EVDO) networks, public land mobile networks, WiFi networks, global positioning system (GPS) communication networks, and/or other networks. According to some embodiments, the network 310 may include a local area network (LAN), a wireless local area network (WLAN), a wide area network, a metropolitan network (MAN), a public switched telephone network (PSTN), an ad hoc network, a managed Internet protocol (IP) network, a virtual private network, an intranet, an Internet, an optical fiber-based network, and/or combinations thereof, or other types of networks.

According to various embodiments, the data management server 320 may include a communication module, a processor, a database, and the like. The data management server 320 may acquire the vehicle data from the vehicle 100 through the communication module. For example, the vehicle data may include the driving data related to the driving of the vehicle 100, the battery data related to the state of the battery 140 and/or the energy management data (e.g., the battery state diagnosis data, the battery lifetime prediction data, the battery operation control data, the battery charging/discharging control data and/or the vehicle module control data). The data management server 320 may record vehicle information provided from the vehicle 100 in a database. The data management server 320 may include a central processing unit (CPU), an application processor (AP), a graphic processor unit (GPU), a neural processing unit (NPU), an image signal processor, and the like and may perform various data processing or calculations.

According to some embodiments, the data management server 320 may support updating of the first program, the second program, a navigation map, and the like, which are installed in the vehicle 100 and may store the driving data, the battery data, the energy management data, and the like provided from the vehicle 100 for a certain period of time. In addition, the data management server 320 may perform various functions related to processing, management, and storage of information or data related to the vehicle 100.

According to some embodiments, the data management server 320 may update the second program based on a plurality of the energy management data received from a plurality of vehicles (or a plurality of computing systems). The data management server 320 may update the second program using not only the energy management data acquired from the vehicle 100 (or the computing system 130) but also the energy management data acquired from a plurality of other vehicles. That is, the data management server 320 may provide second program having improved performance by updating the second program based on big data collected from the plurality of vehicles (or the plurality of computing systems).

According to some embodiments, the data management server 320 may transmit the updated second program to the energy management unit 132. The energy management unit 132 may store the received second program and then generate the energy management data based on the stored second program.

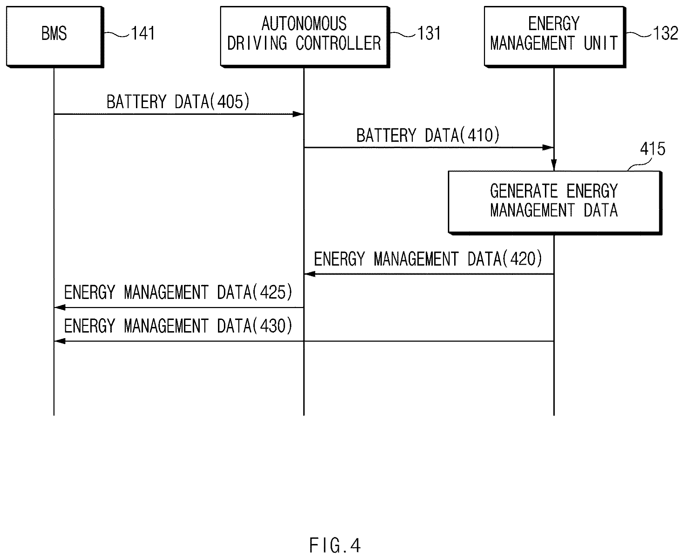

FIG. 4 is a flowchart of operations of a battery management system (BMS), an autonomous driving controller, and an energy management unit according to some embodiments. The autonomous driving controller 131, the energy management unit 132, and the BMS 141 of FIG. 4 may have the same configurations as those of FIGS. 1 and 2, and FIG. 4 may be described using the components of FIGS. 1 and 2.

Some embodiments illustrated in FIG. 4 is merely one embodiment, and a sequence of operations according to various embodiments of the disclosure may be different from that illustrated in FIG. 4. Further, some of the operations illustrated in FIG. 4 may be omitted, the sequence of the operations may be changed, or the operations may be merged.

Referring to FIG. 4, in operation 405, the BMS 141 may transmit the battery data to the autonomous driving controller 131. The battery data may include various pieces of data (e.g., the voltage data, the current data, the temperature data, the SOC, the SOH, the accumulated charging current amount, the accumulated discharging current amount, the accumulated charging power amount, the accumulated discharging power amount, the insulation resistance, the relay state data, or the like) related to the state of the battery 140.

In operation 410, the autonomous driving controller 131 may transmit the battery data acquired in operation 405 to the energy management unit 132.

In operation 415, the energy management unit 132 may generate the energy management data based on the battery data acquired in operation 410. The energy management data may include data for providing various energy management services related to the battery 140. For example, the energy management data may include the battery state diagnosis data, the battery lifetime prediction data, the battery operation control data, the battery charging/discharging control data and/or the vehicle module control data.

In operation 420, the energy management unit 140 may transmit the generated energy management data to the autonomous driving controller 131.

In operation 425, the autonomous driving controller 131 may transmit the transmitted energy management data to the BMS 141. When operation 420 and operation 425 are performed, operation 430 may be omitted.

In operation 430, the energy management unit 140 may directly transmit the generated energy management data to the BMS 141. When operation 430 is performed, operation 420 and operation 425 may be omitted.

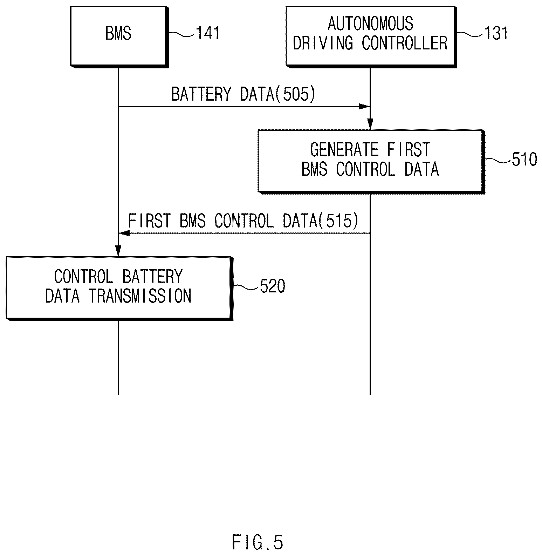

FIG. 5 is a flowchart of the operations of the BMS and the autonomous driving controller according to some embodiments. The autonomous driving controller 131 and the BMS 141 of FIG. 5 may have the same configurations as those of FIGS. 1 and 2 and FIG. 5 may be described using the components of FIGS. 1 and 2.

The embodiment illustrated in FIG. 5 is merely one embodiment, and a sequence of operations according to various embodiments of the disclosure may be different from that illustrated in FIG. 5. Further, some of the operations illustrated in FIG. 5 may be omitted, the sequence of the operations may be changed, or the operations may be merged.

Referring to FIG. 5, in operation 505, the BMS 141 may transmit the battery data to the autonomous driving controller 131. According to some embodiments, operation 505 may be the same as operation 405 of FIG. 4.

In operation 510, the autonomous driving controller 131 may generate the first BMS control data for controlling the battery data transmission of the BMS 141 based on the battery data acquired in operation 505. The first BMS control data may include the instruction for controlling the battery data transmission of the BMS 141. According to some embodiments, the first BMS control data may include the instruction for setting a period during which the BMS 141 transmits the battery data to the autonomous driving controller 131.

According to some embodiments, the autonomous driving controller 131 may identify the temperature of the battery 140 through the battery data acquired in operation 505. The autonomous driving controller 131 may generate the first BMS control data for controlling the battery data transmission period of the BMS 141 based on the identified temperature. For example, the autonomous driving controller 131 may generate the first BMS control data for allowing the battery data transmission period of the BMS 141 to increase as the identified temperature increases. As another example, the autonomous driving controller 131 may generate the first BMS control data for allowing the battery data transmission of the BMS 141 to be stopped for a specified period of time when the identified temperature is greater than or equal to a specified threshold value.

In operation 515, the autonomous driving controller 131 may transmit the first BMS control data generated in operation 510 to the BMS 141.

In operation 520, the BMS 141 may control the battery data transmission to the autonomous driving controller 131 based on the first BMS control data transmitted in operation 515. According to some embodiments, the BMS 141 may set a period during which the battery data is transmitted to the autonomous driving controller 131 as a period included in the received first BMS control data.

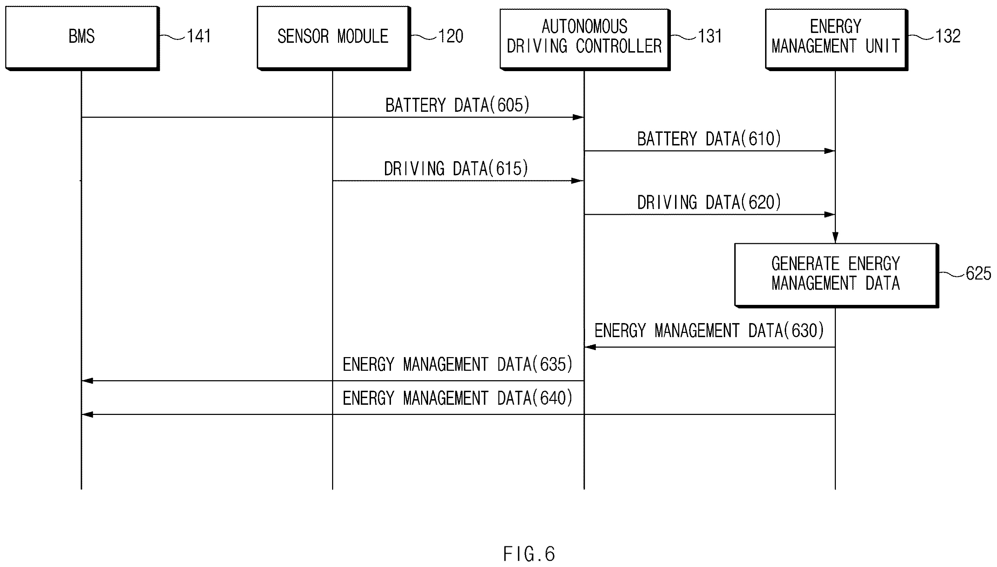

FIG. 6 is a flowchart of operations of the BMS, a sensor module, the autonomous driving controller, and the energy management unit according to some embodiments. The sensor module 120, the autonomous driving controller 131, the energy management unit 132, and the BMS 141 of FIG. 6 may have the same configurations as those of FIGS. 1 and 2, and FIG. 6 may be described using the components of FIGS. 1 and 2.

The embodiment illustrated in FIG. 6 is merely one embodiment, and a sequence of operations according to various embodiments of the disclosure may be different from that illustrated in FIG. 6. Further, some of the operations illustrated in FIG. 6 may be omitted, the sequence of the operations may be changed, or the operations may be merged.

Referring to FIG. 6, in operation 605, the BMS 141 may transmit the battery data to the autonomous driving controller 131. According to some embodiments, operation 605 may be the same as operation 405 of FIG. 4.

In operation 610, the autonomous driving controller 131 may transmit the battery data acquired in operation 605 to the energy management unit 132. According to some embodiments, operation 610 may be the same as operation 410 of FIG. 4.

In operation 615, the sensor module 120 may transmit the driving data to the autonomous driving controller 131. According to some embodiments, the driving data may include various pieces of data related to the driving of the vehicle 100, which is acquired by the sensor module 120. For example, the driving data may include object data and behavior data, the object data may include the type and number of surrounding objects, a distance between the object and the vehicle 100, a position of the object with respect to the vehicle 100, a ground position, a relative speed, a ground speed, relative acceleration, ground acceleration, and the like, and the behavior data may include a position, a moving path, a travel distance, a speed, acceleration, a steering angle, a yaw, a pitch, a roll, and the like of the vehicle 100.

In operation 620, the autonomous driving controller 131 may transmit the driving data acquired in operation 615 to the energy management unit 132.

In operation 625, the energy management unit 132 may generate the energy management data based on the battery data acquired in operation 610 and/or the driving data acquired in operation 620. The energy management data may include data for providing various energy management services related to the battery 140. For example, the energy management data may include the battery state diagnosis data, the battery lifetime prediction data, the battery operation control data, the battery charging/discharging control data and/or the vehicle module control data.

In operation 630, the energy management unit 140 may transmit the generated energy management data to the autonomous driving controller 131.

In operation 635, the autonomous driving controller 131 may transmit the transmitted energy management data to the BMS 141. When operation 630 and operation 635 are performed, operation 640 may be omitted.

In operation 640, the energy management unit 140 may directly transmit the generated energy management data to the BMS 141. When operation 640 is performed, operation 630 and operation 635 may be omitted.

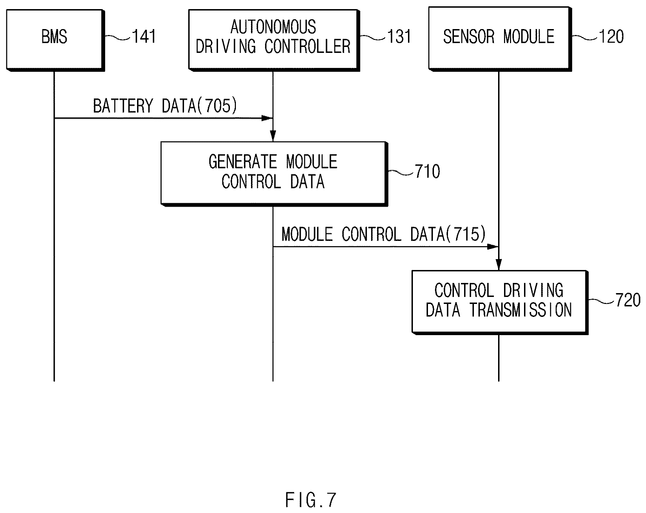

FIG. 7 is a flowchart of the operations of the BMS, the autonomous driving controller, and the sensor module according to some embodiments. The sensor module 120, the autonomous driving controller 131, and the BMS 141 of FIG. 7 may have the same configurations as those of FIGS. 1 and 2, and FIG. 7 may be described using the components of FIGS. 1 and 2.

The embodiment illustrated in FIG. 7 is merely one embodiment, and a sequence of operations according to various embodiments of the disclosure may be different from that illustrated in FIG. 7. Further, some of the operations illustrated in FIG. 7 may be omitted, the sequence of the operations may be changed, or the operations may be merged.

Referring to FIG. 7, in operation 705, the BMS 141 may transmit the battery data to the autonomous driving controller 131. According to some embodiments, operation 705 may be the same as operation 405 of FIG. 4.

In operation 710, the autonomous driving controller 131 may generate the module control data for controlling driving data transmission to the sensor module 120 based on the battery data acquired in operation 705. The module control data may include an instruction of controlling the driving data transmission to the sensor module 120. According to some embodiments, the module control data may include an instruction for setting a period during which the sensor module 120 transmits the driving data to the autonomous driving controller 131. According to some embodiments, the module control data may include an instruction for setting the driving data list which the sensor module 120 transmits to the autonomous driving controller 131.

According to some embodiments, the autonomous driving controller 131 may identify the temperature of the battery 140 through the battery data acquired in operation 705. According to some embodiments, the autonomous driving controller 131 may generate the module control data for controlling a driving data transmission period of the sensor module 120 based on the identified temperature. For example, the autonomous driving controller 131 may generate the module control data for allowing the driving data transmission period of the sensor module 120 to decrease as the identified temperature increases.

According to some embodiments, the warning about thermal runaway of the battery 140 may be performed in stages based on the temperature of the battery 140. According to some embodiments, the autonomous driving controller 131 may generate the module control data for controlling the driving data transmission period of the sensor module 120 according to a thermal runaway warning stage of the battery 140. For example, the autonomous driving controller 131 may generate the module control data for allowing the driving data transmission period of the sensor module 120 to decrease as the thermal runaway warning stage increases.

In operation 715, the autonomous driving controller 131 may transmit the module control data generated in operation 710 to the sensor module 120.

In operation 720, the sensor module 120 may control the driving data transmission to the autonomous driving controller 131 based on the module control data transmitted in operation 715. According to some embodiments, the sensor module 120 may set a period during which the driving data is transmitted to the autonomous driving controller 131 as a period included in the received module control data.

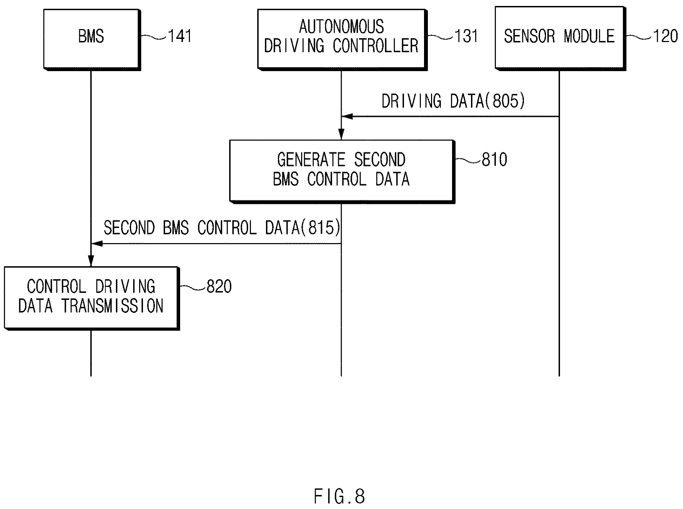

FIG. 8 is a flowchart of the operations of the BMS, the autonomous driving controller, and the sensor module according to some embodiments. The sensor module 120, the autonomous driving controller 131, and the BMS 141 of FIG. 8 may have the same configurations as those of FIGS. 1 and 2, and FIG. 8 may be described using the components of FIGS. 1 and 2.

The embodiment illustrated in FIG. 8 is merely one embodiment, and a sequence of operations according to various embodiments of the disclosure may be different from that illustrated in FIG. 8. Further, some of the operations illustrated in FIG. 8 may be omitted, the sequence of the operations may be changed, or the operations may be merged.

Referring to FIG. 8, in operation 805, the sensor module 120 may transmit the driving data to the autonomous driving controller 131. According to some embodiments, operation 805 may be the same as operation 615 of FIG. 6.

In operation 810, the autonomous driving controller 131 may generate the second BMS control data for controlling the battery data transmission of the BMS 141 based on the driving data acquired in operation 805. The second BMS control data may include the instruction for controlling the battery data transmission of the BMS 141. According to some embodiments, the second BMS control data may include an instruction for controlling a period during which the BMS 141 transmits the battery data to the autonomous driving controller 131 and/or setting the battery data list to be transmitted from the BMS 141 to the autonomous driving controller 131.

According to some embodiments, the autonomous driving controller 131 may identify the size of the driving data acquired in operation 805. According to some embodiments, the autonomous driving controller 131 may generate the second BMS control data for controlling the battery data transmission period of the BMS 141 and/or setting the battery data list to be transmitted from the BMS 141 to the autonomous driving controller 131, based on the identified size of the driving data.

According to some embodiments, the autonomous driving controller 131 may identify the driving environment and/or the driving mode of the vehicle 100 based on the driving data in operation 805. According to some embodiments, the autonomous driving controller 131 may generate the second BMS control data for controlling the battery data transmission period of the BMS 141 and/or setting the battery data list to be transmitted from the BMS 141 to the autonomous driving controller 131, based on the identified driving environment and/or the identified driving mode of the vehicle 100. For example, the autonomous driving controller 131 may generate the second BMS control data for controlling the battery data transmission period of the BMS 141 to be longer than a specified length of time when the vehicle 100 enters a highway. As another example, the autonomous driving controller 131 may generate the second BMS control data for controlling the battery data transmission period of the BMS 141 to decrease as the autonomous driving level (e.g., level 1, level 2, or level 3) of the vehicle 100 increases.

In operation 815, the autonomous driving controller 131 may transmit the second BMS control data generated in operation 810 to the BMS 141.

In operation 820, the BMS 141 may control the battery data transmission to the autonomous driving controller 131 based on the second BMS control data transmitted in operation 815. According to some embodiments, the BMS 141 may set a period during which the battery data is transmitted to the autonomous driving controller 131 as a period included in the received second BMS control data.

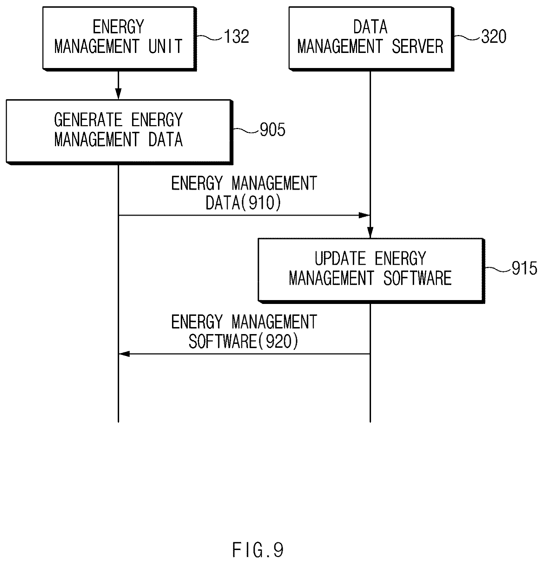

FIG. 9 is a flowchart of operations of the energy management unit and a data management server according to some embodiments. The energy management unit 132 and the data management server 320 of FIG. 9 may have the same configurations as those of FIGS. 1 to 3 and FIG. 9 may be described using the components of FIGS. 1 to 3.

Some embodiments illustrated in FIG. 9 is merely one embodiment, and a sequence of operations according to various embodiments of the disclosure may be different from that illustrated in FIG. 9. Further, some of the operations illustrated in FIG. 9 may be omitted, the sequence of the operations may be changed, or the operations may be merged.

Referring to FIG. 9, in operation 905, the energy management unit 132 may generate the energy management data. According to some embodiments, operation 905 may be the same as operation 415 of FIG. 4 or operation 625 of FIG. 6.

In operation 910, the energy management unit 132 may transmit the energy management data generated in operation 905 to the data management server 320. For example, the energy management unit 132 may transmit the energy management data generated in operation 905 to the data management server 320 using the communication module 110.

In operation 915, the data management server 320 may update the second program based on the plurality of the energy management data received from the plurality of vehicles (or the plurality of computing systems). The data management server 320 may update the second program using not only the energy management data acquired from the vehicle 100 (or the computing system 130) but also the energy management data acquired from a plurality of other vehicles.

In operation 920, the data management server 320 may transmit the updated second program to the energy management unit 132. According to some embodiments, the energy management unit 132 may receive the second program updated in operation 915 from the data management server 320 using the communication module 110. The energy management unit 132 may store the received second program and then generate the energy management data based on the stored second program.

In some examples of the disclosure, for the at least one processor of the computing system in the vehicle, the at least one processor may be implemented as a system-on-a-chip. In this regard, the chip may provide all or some onboard computing capabilities of the autonomous driving platform of the vehicle. For example, calculations relating to driving control and energy management may be performed using a single chip included in the vehicle. In such an example, resources available at the chip may be distributed between driving control and energy management functions performed by the vehicle. Also, in such an example, the chip may include an interface circuit for interfacing with one or more other components of the vehicle, such as other processors, sensors, may be a signal pin or other type of interface port on the chip.

The terms such as "comprise", "include", and "have" described herein mean that the corresponding component may be included, unless there is a particularly contrary statement, and should be interpreted as further including another component, not excluding another component. Unless otherwise defined herein, all the terms used herein, which include technical or scientific terms, may have the same meaning that is generally understood by a person skilled in the art to which embodiments disclosed herein pertain. Terms commonly used, such as those defined in the dictionary, should be interpreted as having a meaning that is consistent with the meaning in the context of the related art and will not be interpreted as having an idealized or overly formal meaning unless expressly defined herein.

The descriptions herein are merely illustrative of the technical ideas disclosed herein, and various modifications and variations may be made by one skilled in the art, to which the embodiments disclosed herein belong, without departing from the essential characteristic of the embodiments disclosed herein. Therefore, embodiments herein are intended not to limit but to explain the technical idea of embodiments disclosed herein, and the scope of the technical idea disclosed herein is not limited by this embodiment. The scope of protection disclosed herein should be construed by the attached claims, and all equivalents thereof should be construed as being included within the scope of the specification.

## Claims

1. A computing system comprising:
at least one processor operatively coupled to a battery management system (BMS) for managing a battery of a vehicle, the at least one processor configured to:
execute a first program controlling autonomous driving of the vehicle;
execute a second program providing one or more energy management services for the vehicle;
acquire battery data from the BMS;
generate, according to the second program, energy management data based on the acquired battery data; and
at least one of:
provide at least a portion of the generated energy management data to the BMS; or
execute the first program based on at least a portion of the generated energy management data.

2. The computing system of claim 1, wherein the energy management data includes at least one of battery state diagnosis data, battery lifetime prediction data, battery operation control data, battery charging/discharging control data, or vehicle control data.

3. The computing system of claim 1, wherein the one or more energy management services includes at least one of a service for providing a diagnosis result obtained by diagnosing state of the battery of the vehicle, or a service for providing a life analysis result of the battery of the vehicle.

4. The computing system of claim 1, wherein the at least one processor is configured to execute the first program to:
generate first BMS control data for controlling battery data transmission of the BMS based on the acquired battery data; and
provide the generated first BMS control data to the BMS.

5. The computing system of claim 4, wherein the first BMS control data controls a battery data transmission period of the BMS, and wherein the at least one processor is configured to execute the first program to generate the first BMS control data for controlling the battery data transmission period of the BMS based on a temperature of the battery identified through the acquired battery data.

6. The computing system of claim 1, wherein the at least one processor is configured to:
execute the first program to acquire driving data from at least one component of the vehicle, wherein the energy management data is generated by the second program further based on the acquired driving data.

7. The computing system of claim 6, wherein the at least one component of the vehicle is at least one of :
a sensor configured to collect data related to a driving situation of the vehicle; or
a communication module configured to communicate data between the at least one processor and an electronic device external to the vehicle.

8. The computing system of claim 6, wherein the at least one processor is configured to:
execute the first program to generate component control data for controlling transmission of the driving data from the at least one component of the vehicle based on the acquired battery data; and
transmit the generated component control data to the at least one component of the vehicle.

9. The computing system of claim 8, wherein the component control data controls a driving data transmission period of the at least one component of the vehicle and is based on a temperature of the battery identified through the acquired battery data.

10. The computing system of claim 6, wherein the at least one processor is configured to:
execute the first program to generate second BMS control data for controlling battery data transmission of the BMS based on the acquired driving data; and
transmit the generated second BMS control data to the BMS.

11. The computing system of claim 10, wherein the second BMS control data controls at least one of: a battery data transmission period of the BMS; or a list of one or more types of battery data to be acquired from the BMS by the at least one processor.

12. The computing system of claim 1, wherein the at least one processor is configured to execute the second program to:
transmit the generated energy management data to a data management server; and
receive an energy management software update from the data management server,
wherein the energy management software update is based on energy management data from computing systems of other autonomous vehicles.

13. The computing system of claim 1, wherein the BMS is included in the battery of the vehicle.

14. The computing system of claim 1, wherein the at least one processor is included in the vehicle.

15. The computing system of claim 14, wherein the at least one processor is included in a system-on-a-chip that is configured to execute both the first and second programs.

16. A vehicle comprising:
a battery including a battery management system (BMS); and
the computing system of claim 1.

17. The vehicle of claim 16, further comprising:
a sensor configured to collect data related to a driving situation of the vehicle,
wherein the at least one processor is configured to execute the first program to:
acquire driving data from the sensor; and
generate the energy management data further based on the acquired driving data.

18. The vehicle of claim 17, wherein the at least one processor is configured to:
execute the first program to generate sensor control data for controlling transmission of the driving data from the sensor based on the acquired battery data; and
transmit the generated sensor control data to the sensor.

19. The vehicle of claim 18, wherein the sensor control data controls a driving data transmission period of the sensor based on a temperature of the battery identified through the acquired battery data.

20. The vehicle of claim 16, further comprising:
a communication module configured to communicate with an external electronic device,
wherein the at least one processor is configured to execute the second program to:
transmit the generated energy management data to a data management server using the communication module; and
receive an energy management software update from the data management server, and
wherein the energy management software update is based on energy management data from computing systems of other autonomous vehicles.
